# EUROPEAN PATENT SPECIFICATION

(11) **EP 3 566 951 B1**
(45) Date of publication and mention of the grant of the patent: **03.11.2021**
(21) Application number: 19161878.4
(22) Date of filing: 11.03.2019
(51) Int. Cl.: B64F 5/10, B05B 13/04, B05C 1/02, B25J 11/00

(54) **APPARATUS THAT SUPPORTS AN AIRCRAFT FUSELAGE WITHOUT EXTERIOR SURFACE CONTACT**
VORRICHTUNG ZUR ABSTÜTZUNG EINES FLUGZEUGRUMPFES OHNE AUSSENFLÄCHENKONTAKT
APPAREIL PRENANT EN CHARGE UN FUSELAGE D'AÉRONEF SANS CONTACT DE SURFACE EXTÉRIEUR

(30) Priority: 18.04.2018 US 201815956071
(43) Date of publication of application: 13.11.2019
(73) Proprietor: The Boeing Company, Chicago, IL 60606-1596 (US)
(72) Inventor: Moore, Matthew B., Chicago, 60606-1596 (US); Squires, Lile P., Chicago, 60606-1596 (US); Stone, Patrick B., Chicago, 60606-1596 (US); Zornes, Jeffrey A., Chicago, 60606-1596 (US)
(74) Representative: Witte, Weller & Partner Patentanwälte mbB

(56) References cited:
- EP-A1- 0 341 134
- EP-A1- 3 290 166
- EP-A2- 2 604 523
- DE-A1-102004 056 284
- DE-C- 487 996
- US-A- 5 220 849
- US-A1- 2013 071 573
- US-B1- 9 273 990

## Description

### FIELD

This disclosure pertains to an airframe handling apparatus that supports and moves an aircraft fuselage. Components of the apparatus are attachable to the aircraft fuselage utilizing wing attachment structures on the aircraft fuselage that are designed for flight loads. With the aircraft fuselage attached to the apparatus, the entire fuselage is supported on two transport mechanisms of the apparatus that can be operated to move and manipulate the aircraft fuselage, supporting the aircraft fuselage as if the wing was present. With the apparatus attached to the aircraft fuselage, movement of the fuselage by the apparatus imparts no handling-induced internal loads on the aircraft fuselage, and maximizes unobstructed access to the exterior surface of the fuselage for painting and other surface preparations. Other components are utilized in fuselage assembly, for example, supporting individual fuselage components as those components are positioned with respect to and attached to one another.

### BACKGROUND

In the typical assembly of an aircraft, the wing, forward landing gear, and the landing gear beneath the wing are attached to the fuselage relatively early in the assembly process. This enables the aircraft to be moved on the aircraft landing gear during the assembly process.

When the assembly of the aircraft advances to the stage where the exterior of the aircraft fuselage is to be painted, the aircraft is moved into a paint hanger. The paint hanger has a large footprint to accommodate the aircraft and in particular the aircraft wing, with the aircraft wing and the landing gear beneath the aircraft wing being needed to move the aircraft through the assembly process.

Alternatives to maintaining large paint hangers for aircraft have been considered. The alternatives involve painting the aircraft fuselage prior to the aircraft wing and landing gear beneath the wing being assembled to the aircraft fuselage. This enables the fuselage to be painted in a much smaller paint hanger than is required for painting an aircraft with the wing and landing gear beneath the wing assembled to the aircraft.

For example, an overhead crane that suspends the aircraft fuselage has been proposed. However, a suspension system such as this does not allow for movement of the aircraft fuselage beyond the reach of the suspension system.

In another example, the use of automated guide vehicles (AGV) to support and move the aircraft fuselage has been proposed. However, these proposed systems tend to obstruct surface areas of the aircraft fuselage where they engage and support the aircraft fuselage, preventing paint from reaching these areas.

EP 2 604 523 A2 states, according to its abstract, a facility for assembling aircraft fuselages comprises a plurality of movable cradles. Each cradle is configured to support a fuselage keel structure and assemble a panelized fuselage in a single upright build position.

US 2013/ 071 573 A1 states, according to its abstract, a method and apparatus for spraying a liquid onto a surface. An apparatus comprises a nozzle and a number of disks. The nozzle is configured to generate a spray of a liquid towards a surface. The number of disks is positioned relative to the nozzle and configured to form a gap through which a portion of the spray of the liquid passes towards the surface.

EP 0 341 134 A1 states, according to its abstract, that means of controlling the system are capable, prior to the execution of a predetermined task, of: - controlling the displacement of first and of second mobile means, by the intermediary of driving means, to a command position, - receiving information from detection means mounted on the said first and second mobile means, for measuring the difference between the real position of the said first and second mobile means and the said command position, - processing the said information and controlling, as a function of the said information, the displacement of the said articulated arm or arms in order to bring the said working unit into the said reference position. The document applies in particular to painting heavy transport aircraft.

US 5 220 849 A states, according to its abstract, that a gravitational compensating system that eliminates gravitational torque of linked robotic arms is provided. A three arm example is disclosed which rotates around a vertical reference axis. The second and third arm rotate around two separate horizontal axes. The gravitational compensating system compensates for the gravitational torque attributed to the second arm as it rotates about its horizontal swing axis and the gravitational torque attributable to the third arm as it rotates about its horizontal swing axis. The combined actuating and compensating systems for the second and third arm are housed in the base structure of the first arm. The compensating system also applies to two arm examples.

DE 10 2004 056 284 A1 states, according to its abstract, that a transporting device includes a positioning stand, which has at least one positioner for alignment in the workstation. This provides the correct alignment for at least one aircraft section on at least one positioning stand relative to the workstation. Connecting devices are positively fitted in receivers in the region of the base surface. The transporting device thus provides a rough alignment of the section in the workstation.

EP 3 290 166 A1 states, according to its abstract, that a surface treatment repair assembly for applying a surface treatment to a contoured surface includes an attachment device configured to removably attach to the contoured surface and that a robotic unit is coupled to the attachment device. Furthermore, a treating unit is operably mounted on the robotic unit and including a plurality of applicator heads forming a treatment array and each applicator head is configured to apply a surface repair treatment. At least one sensor is mounted on the treating unit and configured to identify a target area for the surface repair treatment and a controller is operably coupled to the robotic unit and the treating unit. The controller is programmed to control a movement of the robotic unit to position the treatment array adjacent to the target area and to selectively operate the treatment array to apply the surface repair treatment on the target area of the contoured surface.

DE 487 996 C2 states, according to its introduction, a construction scaffolding for aircraft and serves for designing auxiliary scaffolding for the restoration of damaged aircraft, which is to be carried out at the landing site itself, so that the auxiliary scaffolding can be transported particularly advantageously and quickly, in order to speed up and reduce the cost of recovery.

US 9 273 990 B1 states, according to its abstract, that a repair fixture for an aircraft portion comprises a frame for supporting the aircraft portion, and rigid variable-length rods having first ends secured to the frame and second ends configured to be firmly secured to the aircraft portion and locked in length.

### SUMMARY

The airframe handling apparatus of this disclosure overcomes the disadvantages associated with applying paint or other surface preparations to an aircraft fuselage prior to wing and landing gear installation. The apparatus operates to support and move the aircraft fuselage. In particular, the apparatus attaches to the aircraft fuselage in place of the wing, utilizing wing attachment structures on the underside of the aircraft fuselage that are designed for flight loads. With the apparatus temporarily, removably attached to the aircraft fuselage, the aircraft fuselage can be supported on two fuselage transport mechanisms. The two transport mechanisms allow the aircraft fuselage to be moved and manipulated as if the landing gear were present. Because the apparatus is attached to the aircraft fuselage at wing attachment structures that are designed for flight loads, the apparatus imparts no handling-induced internal loads on the incomplete aircraft fuselage structure, and maximizes unobstructed access to all exterior areas of the aircraft fuselage skin for painting and/or other surface preparation.

Therefore, there are provided an apparatus according to claim 1, and a method according to claim 10. Further optional features are mentioned in the dependent claims 2-9 and 11-14.

### BRIEF DESCRIPTION OF THE DRAWINGS

Figure 1 is a representation of a top, perspective view of the assembly jig or jig of the apparatus of this disclosure.
Figure 2 is a representation of a perspective view of the jig with a center section of an aircraft fuselage attached to the jig and with the jig supported on the jig transport mechanism of the apparatus of this disclosure.
Figure 3 is a representation of the center section of the aircraft fuselage attached to the jig which in turn is supported on the jig transport mechanism in an assembly area of a hanger or other aircraft manufacturing facility.
Figure 4 is a representation of the center section of the aircraft fuselage, the jig, the jig transport mechanism and a forward section of an aircraft fuselage that is positioned relative to the center section of the aircraft fuselage for attachment to the center section of the aircraft fuselage.
Figure 5 is a representation of the center section of the aircraft fuselage, the jig, the jig transport mechanism, the forward section of the aircraft fuselage and a rearward section of the aircraft fuselage that is positioned relative to the center section of the aircraft fuselage for attachment to the center section of the aircraft fuselage.
Figure 6 is a representation of the pair of fuselage transport mechanisms of the apparatus of this disclosure where tines of the fuselage transport mechanisms are positioned to be inserted into opposite sides of the jig.
Figure 7 is a representation of the pair of fuselage transport mechanisms with their tines inserted into the opposites sides of the jig and the tines lifting the jig and the aircraft fuselage attached to the jig.
Figure 8 is a representation of the aircraft fuselage and the attached jig lifted by the fuselage transport mechanisms.
Figures 9A and 10 are representations of the aircraft fuselage attached to the jig and raised by the fuselage transport mechanisms in a paint hanger where the unobstructed exterior surfaces of the aircraft fuselage can be painted and/or receive other surface preparations.
Figure 9B is a representation of a variation of the paint hanger of Figure 9A.

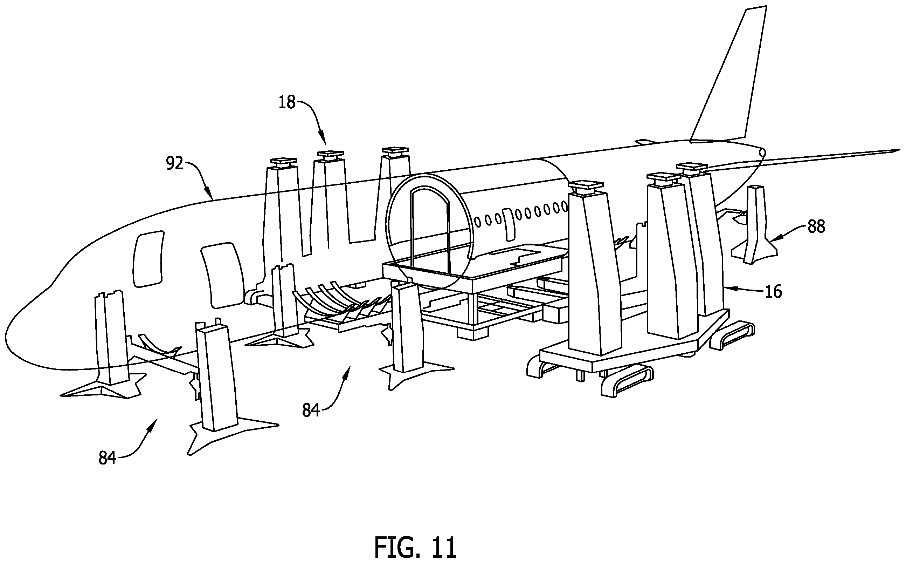

Figure 11 is a representation of the aircraft fuselage being transported by the fuselage transport mechanisms back to an assembly hanger where the fuselage transport mechanisms lower the jig back onto the jig transport mechanism and lower the aircraft fuselage onto supporting cradles.

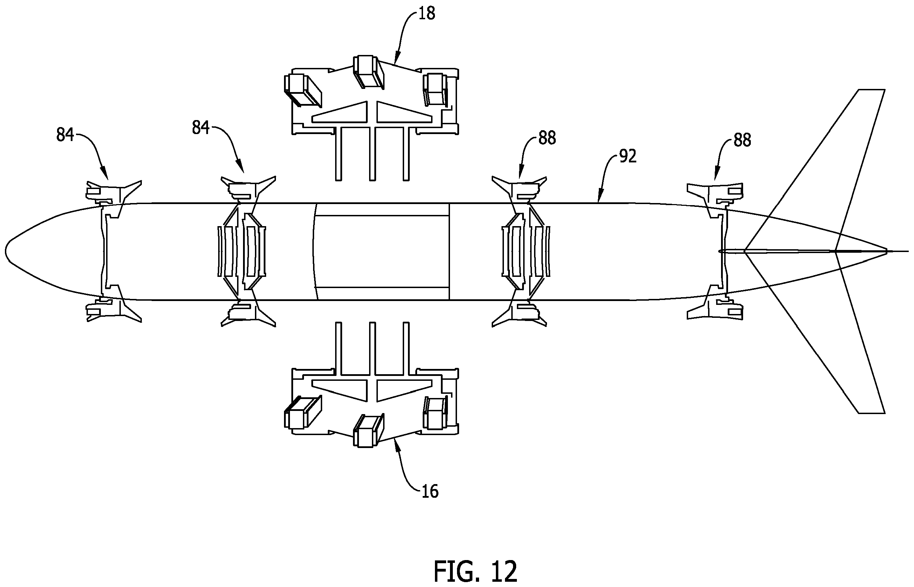

Figure 12 is a representation of the fuselage transport mechanisms disengaged from the jig supported on the jig transport mechanism.
Figure 13 is a representation of the jig transport mechanism moving the jig from beneath the aircraft fuselage providing access under the center section of the aircraft fuselage for attachment of a wing and landing gear beneath the wing to the aircraft fuselage.
Figure 14 is a representation of the attachment of a wing and landing gear beneath the aircraft fuselage of Figure 13.

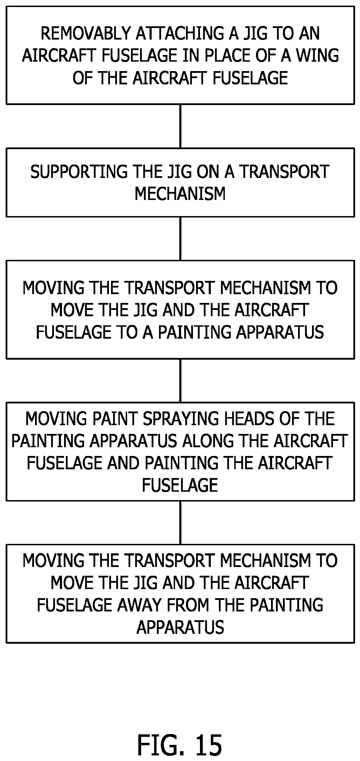

Figure 15 is a flow chart representing a method of painting an aircraft fuselage employing the apparatus of this disclosure.

### DESCRIPTION

The airframe handling apparatus of this disclosure is basically comprised of four components, an assembly jig or jig 12, a jig transport mechanism 14, and a pair of fuselage transport mechanisms 16, 18. Each of these components is constructed of materials that provide the components with sufficient structural strength for their intended functions.

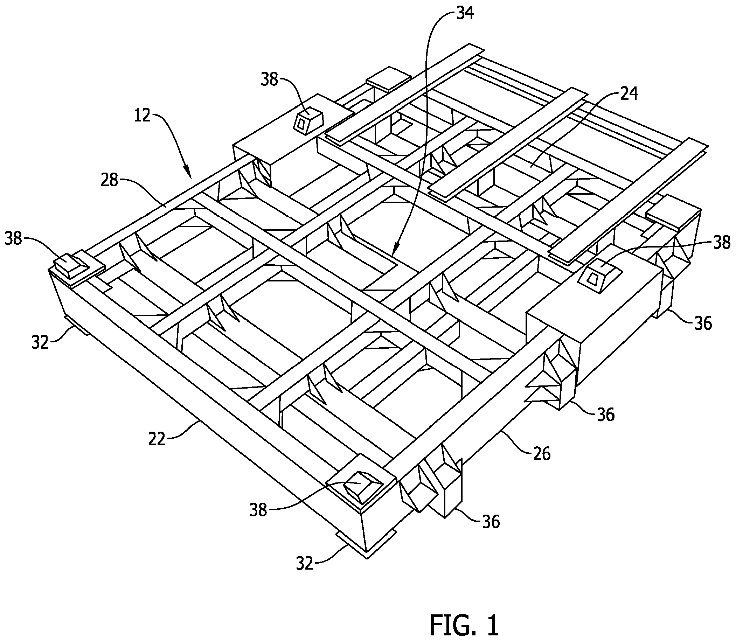

Figure 1 is a representation of a top, perspective view of the jig assembly or jig 12. The jig 12 has a general rectangular configuration defined by a front panel 22, an opposite rear panel 24, a right side panel 26 and an opposite left side panel 28. The jig 12 is supported on four support columns 32 positioned at the four corners of the jig 12. Only two of the support columns 32 are visible in Figure 1. A reinforcing framework 34 interconnects the front panel 22 and rear panel 24, and the right side panel 26 and the left side panel 28. The reinforcing framework 34 adds structural rigidity to the construction of the jig 12. There are three reinforced receivers 36 spatially arranged along the right side panel 26 and the left side panel 28. Only the receivers 36 on the right side panel 26 are represented in Figure 1. The positions and the constructions of the receivers 36 on the left side panel 28 are the same as those of the receivers 36 on the right side panel 26. The receivers 36 have a general tubular construction with a rectangular cross-section configuration. The receivers 36 are constructed and configured to interface with the fuselage transport mechanisms 16, 18, as will be explained. The jig 12 also has a plurality of locators 38 on the top of the jig. Each locator 38 is configured to engage a wing attachment structure 44. There are four locators 38 represented in Figure 1. The locators 38 are an important part of the construction of the jig 12. The locators 38 are positioned on the jig 12 relative to each other to align with or coincide with wing attachment structures on the underside of an aircraft fuselage, as will be explained. Although there are four locators 38 arranged in a rectangular pattern adjacent the four corners of the jig 12 represented in Figure 1, the number of locators and their relative positions on the jig will be different depending on the construction of the aircraft fuselage with which the airframe handling apparatus is used.

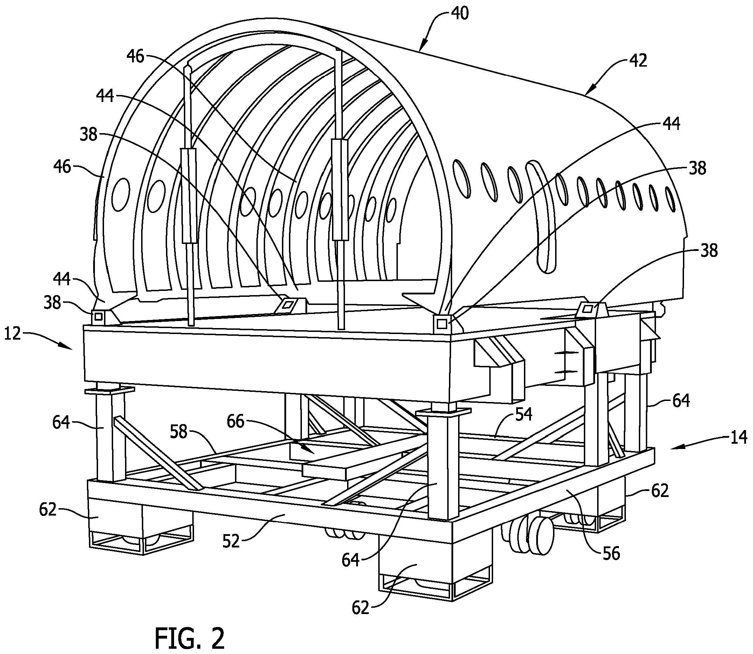

Figure 2 is a representation of the jig 12 removably attached to center section 40 of an aircraft fuselage 42. At this point in time, the aircraft fuselage 42 is a partially assembled aircraft fuselage (i.e., center section 40) that has been assembled on the jig 12. The center section 40 of the aircraft fuselage 42 is attachable between one or more forward sections of the aircraft fuselage 42 and one or more rearward sections of the aircraft fuselage 42, as will be explained. As stated earlier, the plurality of locators 38 are positioned on the jig 12 to align with or coincide with wing attachment structures 44 on the underside of the center section 40 of the aircraft fuselage 42. The locators 38 are positioned on the jig 12 to correspond with positions of the wing attachment structures 44 in an opening in the underside of the center section 40 of the aircraft fuselage 42 provided for a wing box of an aircraft wing. The locators 38 are attached to the wing attachment structures 44 of the aircraft fuselage 42 and secure the jig 12 in the opening in the underside of the aircraft fuselage 42 provided for the wingbox, thereby attaching the jig 12 to the aircraft fuselage 42 in place of the wing and in place of the landing gear beneath the wing. As represented in Figure 2, each of the locators 38 is attached to a wing attachment structure 44 at the opposite bottom ends of two epsilons or ribs 46 of the fuselage 42 that will attach to the aircraft wing when the wing is assembled to the fuselage 42. Securing the portion of the aircraft fuselage 42 to each locator 38 accurately positions center section 40 of the aircraft fuselage 42 relative to the jig 12. The positions of the locators 38 accurately position the wing attachment structures 44 at the bottom ends of the two ribs 46. With the two ribs 46 having the wing attachment structures 44 secured to the locators 38 on the jig 12, the remainder of the aircraft fuselage 42 is then assembled on the two ribs 46 and the jig 12. This constructs the aircraft fuselage 42, or more specifically the center section 40 of the aircraft fuselage 42, with the wing attachment structures 44 accurately positioned so that an aircraft wing can be assembled to the aircraft fuselage 42 in place of the jig 12 when the construction of the aircraft fuselage 42 is complete.

Figure 2 is also a representation of the jig 12 supported on the jig transport mechanism 14. The jig transport mechanism 14 has a general, rectangular configuration that closely corresponds to the rectangular configuration of the jig 12. The jig transport mechanism has a base constructed with a front bar 52 and an opposite rear bar 54, and a right bar 56 and an opposite left bar 58. The four bars 52, 54, 56, 58 give the jig transport mechanism 14 its rectangular configuration that closely conforms to the rectangular configuration of the jig 12. The jig transport mechanism 14 also has four drive wheel assemblies 62 positioned at the four corners of the jig transport mechanism 14. The drive wheel assemblies 62 can be controlled to move the jig transport mechanism 14 in any direction over the floor of a hanger or a manufacturing facility. There are also four support pillars 64 that extend upwardly from the four corners of the jig transport mechanism 14. The support pillars 64 are positioned to engage with and support the four support columns 32 of the jig 12, and thereby support the jig 12 on the jig transport mechanism 14. The support columns 32 of the jig 12 engage with and are supported on the tops of the support pillars 64 of the jig transport mechanism 14 without the support columns 32 being attached to the support pillar 64. In this manner, the jig 12 can be lifted off of the jig transport mechanism 14 supporting the jig 12. The construction of the jig transport mechanism 14 is also reinforced by a reinforcing frame 66 that connects the front bar 52 and rear bar 54, and the right side bar 56 and left side bar 58.

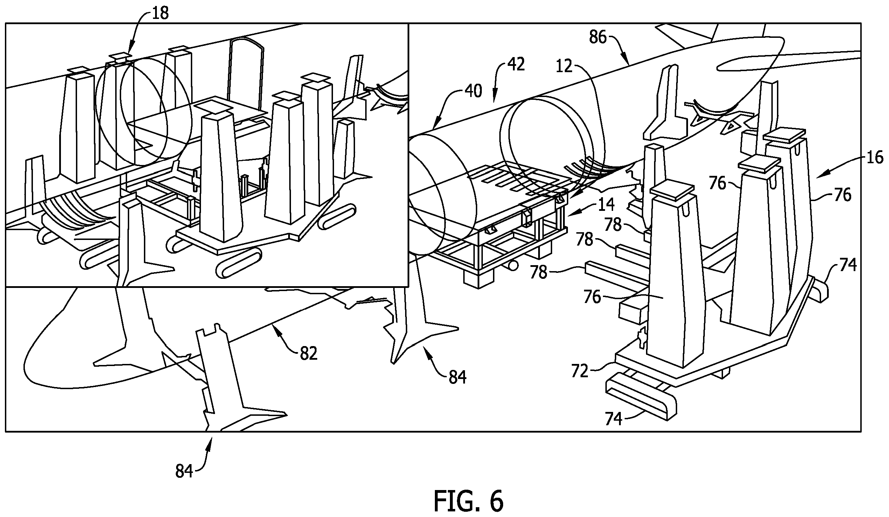

Figure 6 shows a representation of the pair of fuselage transport mechanisms 16, 18. Only one of the fuselage transport mechanisms 16 is clearly shown in Figure 6. However, both fuselage transport mechanisms 16, 18 have the same constructions. The fuselage transport mechanism 16 has a base 72 that supports the transport mechanism 16 for movement in substantially any desired direction. The base 72 is supported on two tracked automated guide vehicles 74. The automated guide vehicles 74 can be controlled to move the base 72 and the fuselage transport mechanism 16 in any desired direction. The fuselage transport mechanism 16 also has three upright bodies or jack towers 76 on the base 72. The three jack towers 76 are substantially the same in construction and are positioned side by side on the base 72. Each of the jack towers 76 has a fork tine 78 that projects horizontally from the jack tower. The three fork tines 78 are parallel and are positioned horizontally from each other by a distance that corresponds to the distance between the three reinforced receivers 36 in the opposite sides of the jig 12. This enables the three fork tines 78 to be inserted through the three reinforced receivers 36 in the opposite sides of the jig 12. The jack towers 76 are operable to selectively move their associated tine 78 vertically upwardly and downwardly.

In use of the airframe handling apparatus, an aircraft fuselage 42, or more specifically a center section 40 of the aircraft fuselage 42, is first assembled on the jig 12. This is done in an assembly area where the jig 12 is not yet positioned on the jig transport mechanism 14. The aircraft fuselage 42 is assembled on the jig 12 with wing attachment structures 44 of the aircraft fuselage 42 connected to the locators 38. The wing attachment structures 44 are accurately located on the locators 38 by pins or bolts that are inserted through the wing attachment structures 44 and the locators 38. This enables the aircraft fuselage 42 to be accurately constructed on the jig 12 where the wing attachment structures 44 will align with and coincide with structures on an aircraft wing that connect to the wing attachment structures 44 in attaching the wing to a completed aircraft fuselage.

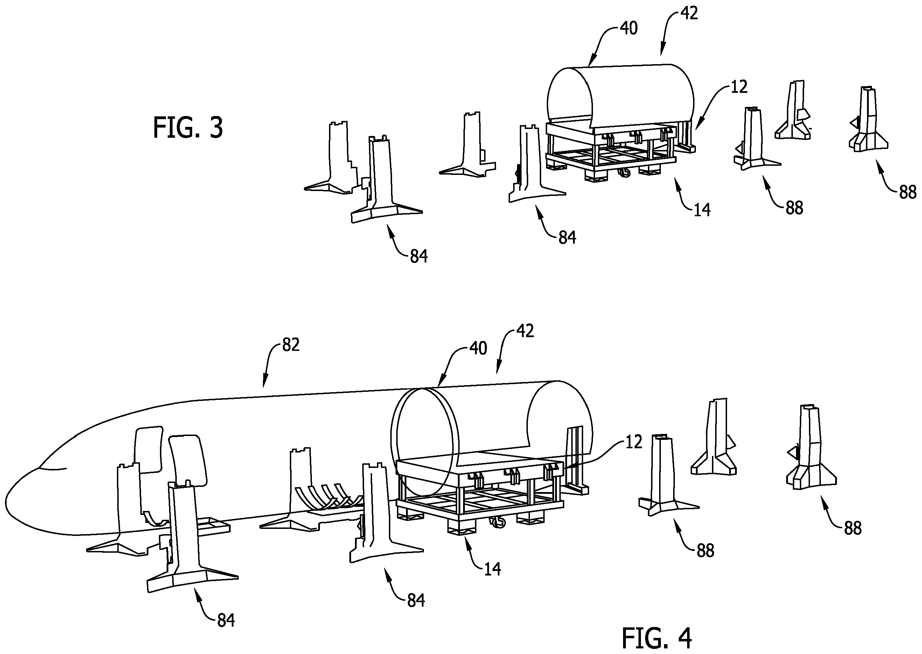

After the center section 40 of the aircraft fuselage 42 has been constructed on the jig 12, the jig is moved from the assembly area and is positioned on the jig transport mechanism 14 as represented in Figure 2. The lifting of the jig 12 onto the jig transport mechanism 14 is accomplished by a crane or other equivalent mechanism. With the jig 12 removably attached to the aircraft fuselage 42 and positioned on the jig transport mechanism 14, the jig transport mechanism can then be operated to move the jig to a location where the remainder of the aircraft fuselage construction can be attached to the center section 40 of the aircraft fuselage 42. The fuselage transport mechanisms 16, 18 are operable to move the jig 12 horizontally in multiple directions, and to selectively raise and lower the jig 12 vertically. The movement of the jig 12 supporting the center section 40 of the aircraft fuselage 42 and supported on the jig transport mechanism 14 to the assembly area is represented in Figure 3. The movement of the jig 12 and the center section 40 of the aircraft fuselage 42 to the assembly area by the jig transport mechanism 14 is controlled by a computer numerical control (CNC) system. This accurately positions the jig 12 removably attached to the center section 40 of the aircraft fuselage 42 and supported on the jig transport mechanism 14 in the assembly area. The jig 12 and the jig transport mechanism 14 are constructed to support the center section 40 of the aircraft fuselage 42 at an accurate vertical height position to enable the center section 40 of the aircraft fuselage 42 to be joined to one or more aircraft fuselage forward sections and one or more aircraft fuselage rearward sections.

Figure 4 is a representation of an aircraft fuselage forward section 82 being attached to the center section 40 of the aircraft fuselage 42. In Figure 4 the aircraft fuselage forward section 82 is supported on a conventional rigid body motion system 84. The rigid body motion system 84 is controlled by a CNC system to support the aircraft fuselage forward section 82 at the proper vertical height position relative to the center section 40 of the aircraft fuselage 42, and then move the aircraft fuselage forward section 82 to the center section 40 of the aircraft fuselage 42 for assembly of the aircraft fuselage forward section 82 to the center section 40 of the aircraft fuselage 42. The connection between the center section 40 of the aircraft fuselage 42 and the aircraft fuselage forward section 82 can be accomplished in any known manner.

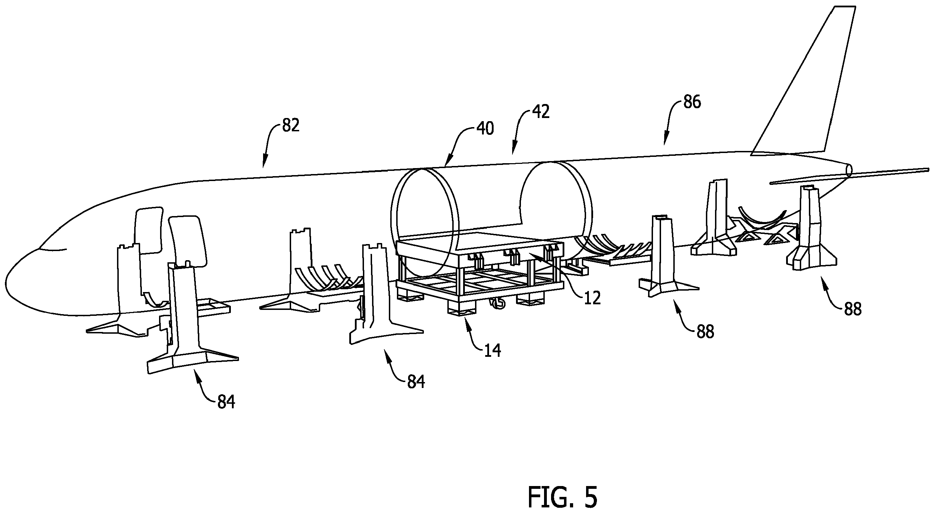

Figure 5 is a representation of an aircraft fuselage rearward section 86 being attached to the center section 40 of the aircraft fuselage 42. The aircraft fuselage rearward section 86 is also supported on a conventional rigid body motion system 88. The rigid body motion system 88 is controlled by a CNC system to elevate the aircraft fuselage rearward section 86 to a proper vertical height relative to the center section 40 of the aircraft fuselage 42 to attach the aircraft fuselage rearward section 86 to the center section 40 of the aircraft fuselage 42, and then move the aircraft fuselage rearward section 86 to the center section 40 of the aircraft fuselage 42 to where the aircraft fuselage rearward section 86 can be joined to the center section 40 of the aircraft fuselage 42. Again, the attachment of the aircraft fuselage rearward section 86 to the center section 40 of the aircraft fuselage 42 can be accomplished in any known conventional manner.

After the jig transport mechanism 14 has moved the jig 12 and the center section 40 of the aircraft fuselage 42 attached to the jig to the assembly area, and after the aircraft fuselage forward section 82 and the aircraft fuselage rearward section 86 have been assembled to the center section 40 of the aircraft fuselage 42, the pair of fuselage transport mechanisms 16, 18 are moved and positioned at the opposite sides of the jig 12. This is represented in Figure 6. The fuselage transport mechanisms 16, 18 are then moved toward the jig 12, causing the fork tines 78 on the jack tower 76 of the fuselage transport mechanisms 16, 18 to move into and through the three reinforced receivers 36 on the opposite sides of the jig 12. This releasably attaches the pair of fuselage transport mechanisms 16, 18 to the jig 12, the center section 40 of the aircraft fuselage 42, the aircraft fuselage forward section 82 and the aircraft fuselage rearward section 86.

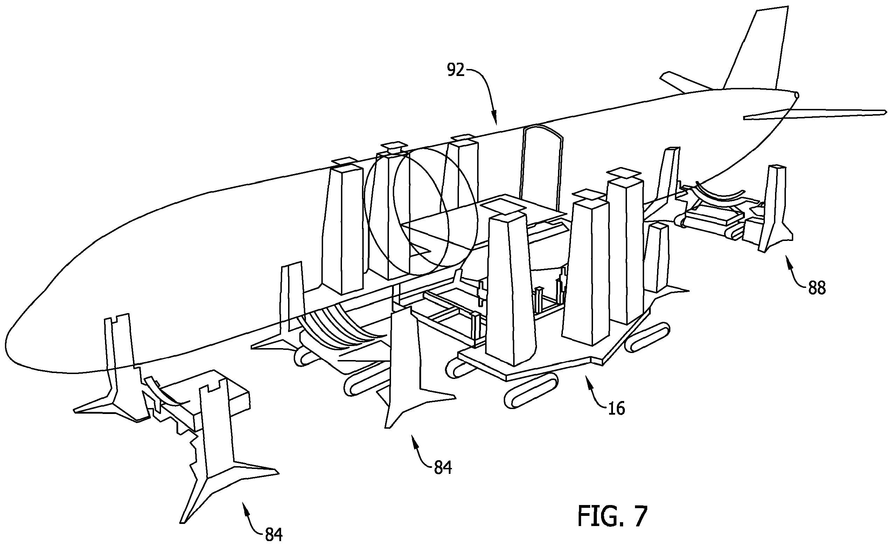

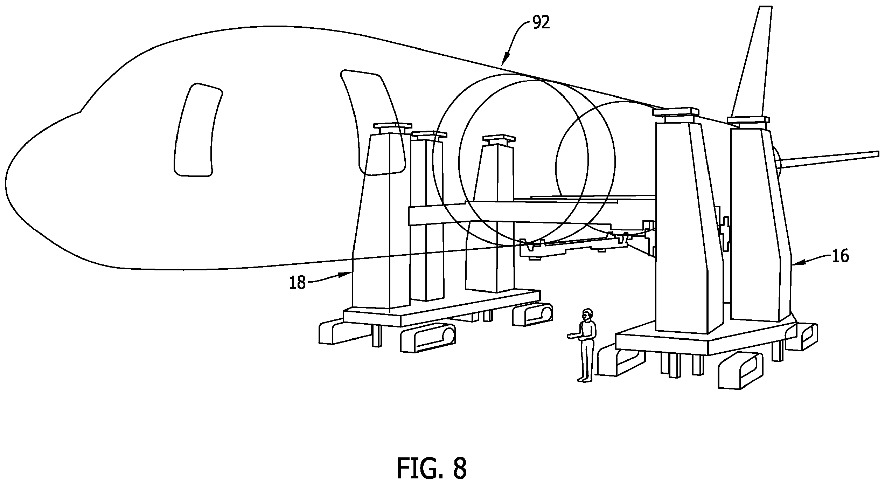

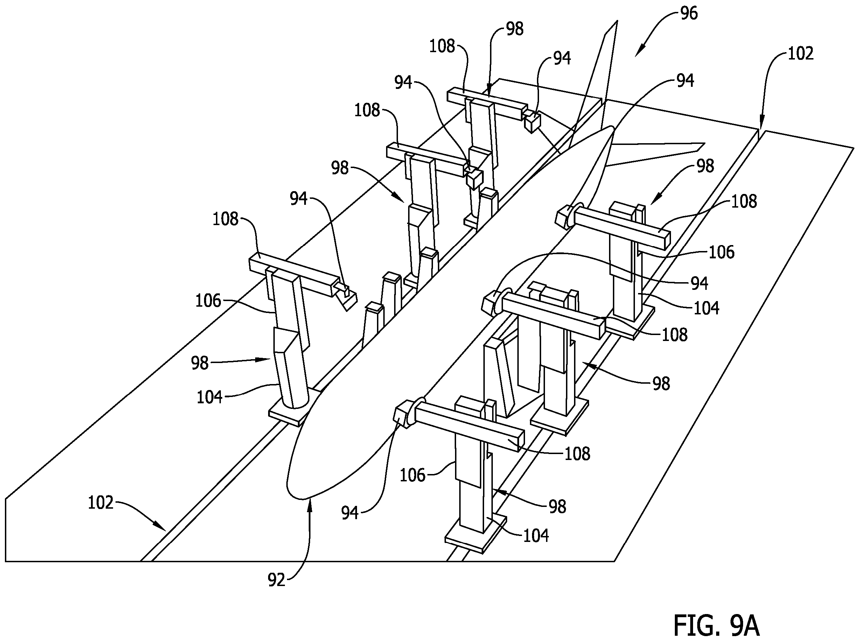

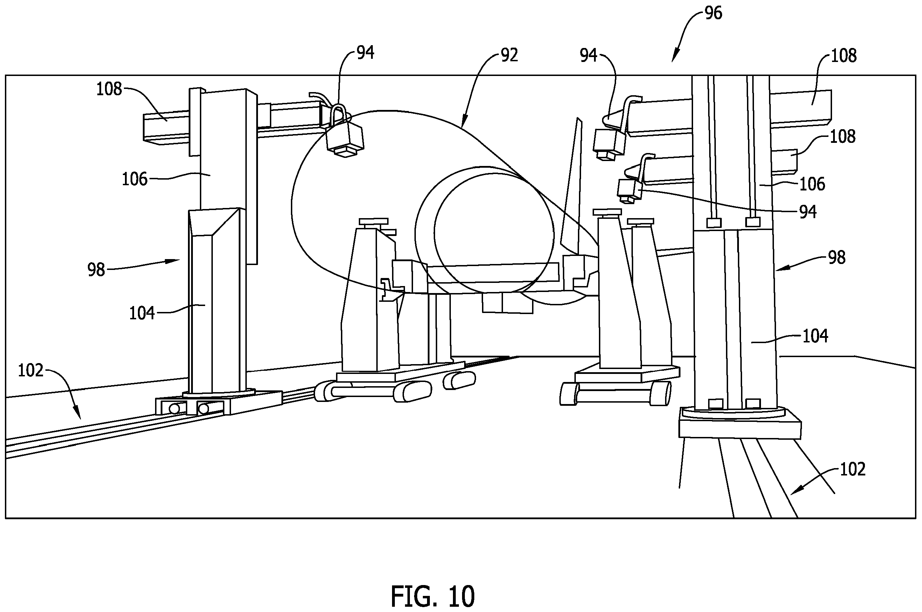

With the fuselage transport mechanisms 16, 18 removably attached to the jig 12 and assembled aircraft fuselage 92 comprised of the center section 40 of the aircraft fuselage 42, the aircraft fuselage forward section 82 and the aircraft fuselage rearward section 86 supported on the jig 12, the fuselage transport mechanisms 16, 18 support the entire assembled aircraft fuselage 92. The fuselage transport mechanisms 16, 18 can then lift the jig 12 and the assembled aircraft fuselage 92 off of and above the jig transport mechanism 14 and off of and above the rigid body motion systems 84, 88. This is represented in Figure 7. With the entire assembled aircraft fuselage 92 raised above the jig transport mechanism 14 and the rigid body motion systems 84, 88, the jig transport mechanism 14 and the rigid body motion systems 84, 88 can be moved away from the assembled aircraft fuselage 92. This is represented in Figure 8. The assembled aircraft fuselage 92 can then be moved by the fuselage transport mechanisms 16, 18 to a painting hanger as represented in Figures 9A and 10. As represented in Figures 9A and 10, the fork tines 78 of the fuselage transport mechanisms 16, 18 space the jack towers 76 of the fuselage transport mechanisms 16, 18 horizontally away from the assembled aircraft fuselage 92 a sufficient distance to enable paint spraying heads 94 of an automated painting apparatus 96 in a paint hanger to have access to all of the exterior surface of the skin of the assembled aircraft fuselage 92 for application of paint or other surface preparations.

As represented in Figures 9A and 10, the automated painting apparatus 96 is comprised of a plurality of paint towers 98. There are six paint towers 98 represented in Figures 9A and 10. The automated painting apparatus 96 could comprise more than the six paint towers 98 represented, or fewer than the six towers represented. Each of the paint towers 98 is automated and controlled by CNC to move along tracks 102. The tracks 102 are parallel and extend along opposite sides of the aircraft fuselage 92 attached to the jig 12 and supported by the jack towers 76 in the automated painting apparatus 96. The paint towers 98 are automated guided vehicles and are controlled to move back and forth along the tracks 102 and move completely along the length of the assembled aircraft fuselage 92. Each of the paint towers 98 is comprised of a lower section 104 and an upper section 106. The lower sections 104 and upper sections 106 of the paint towers 98 move vertically relative to each other. This enables the upper sections 106 of the paint towers 98 to be moved vertically relative to the assembled aircraft fuselage 92 to positions below the assembled aircraft fuselage 92 and positions above the assembled aircraft fuselage 92.

Each of the paint towers 98 also comprises a paint tower arm 108 attached to the upper section 106 of the paint tower 98. The paint tower arms 108 are operable to move horizontally back and forth relative to the upper sections 106 of the paint towers 98. This enables the paint tower arms 108 to be moved toward the assembled aircraft fuselage 92 in the automated painting apparatus 96 and away from the assembled aircraft fuselage 92. The paint tower arms 108 could also be attached to the upper sections 106 of the paint towers 98 to pivot about horizontal axes relative to the upper sections 106 of the paint towers 98.

Each of the paint towers 98 also includes a robot spraying head 94 connected to the distal end of the paint spraying arm 108 of the paint tower 98. In this disclosure the spraying heads 94 are described as paint spraying heads 94. However, the spraying heads 94 could be used to apply or spray any type of coating or substance on the aircraft fuselage 92. The paint spraying heads 94 are connected to their respective paint tower arms 108 for pivoting movement in opposite vertical directions, upward and downward relative to the paint tower arms 108, and pivoting movement in opposite horizontal directions, from side to side relative to the paint tower arms 108. The paint spraying heads 94 are operable to spray paint from the paint spraying heads 94 controlled by the CNC of the automated painting apparatus 96.

By movement of the paint towers 98 along the tracks 102, by relative movement of the paint tower lower sections 104 and the paint tower upper sections 106, by movement of the paint tower arms 108 and by movement of the paint spraying heads 94 and the dispensing of paint from the paint spraying heads 94 controlled by the CNC of the automated painting apparatus 96, the assembled aircraft fuselage 92 removably attached to the jig 12 and supported on the fuselage transport mechanisms 16, 18 can be completely covered with paint, or other similar types of surface preparations. With the assembled aircraft fuselage 92 supported by the jig 12, there is no exterior surface of the assembled aircraft fuselage 92 which is obstructed by the automated painting apparatus 96. This enables the entire exterior surface of the assembled aircraft fuselage 92 to receive paint or other surface preparation.

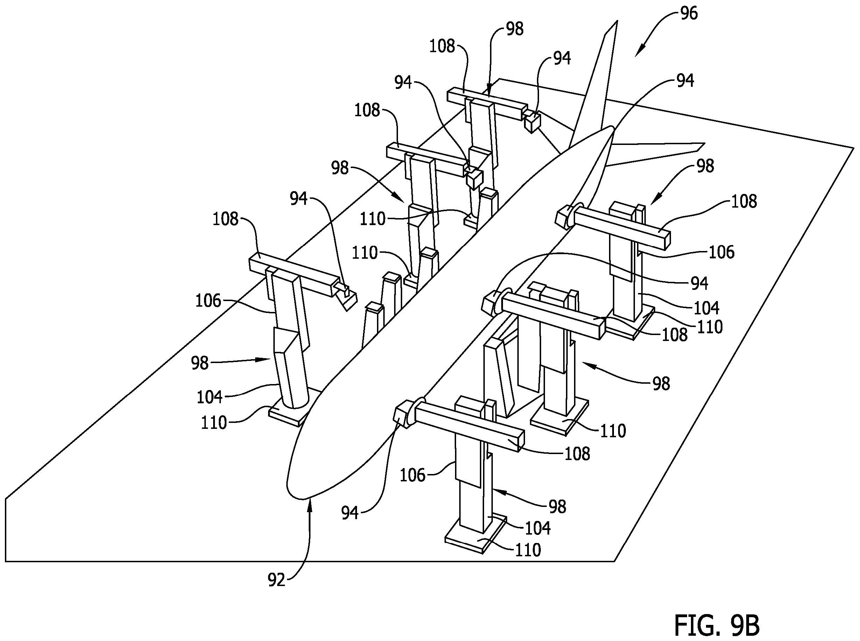

Figure 9B is a representation of the automated painting apparatus 96 of Figure 9A, except that the automated painting apparatus 96 of Figure 9B does not include the tracks 102. Instead, each of the paint towers 98 is mounted on an automated guide vehicle (AGV) 110. The AGVs are controlled by CNC to move back and forth along the opposite sides of the assembled aircraft fuselage 92 and completely along the length of the assembled aircraft fuselage 92. The AGVs 110 are not limited to movements along the tracks 102 of the Figure 9A representation of the automated painting apparatus 96. Apart from this, the automated painting apparatus 96 of Figure 9B operates in the same manner as the automated painting apparatus 96 of Figure 9A.

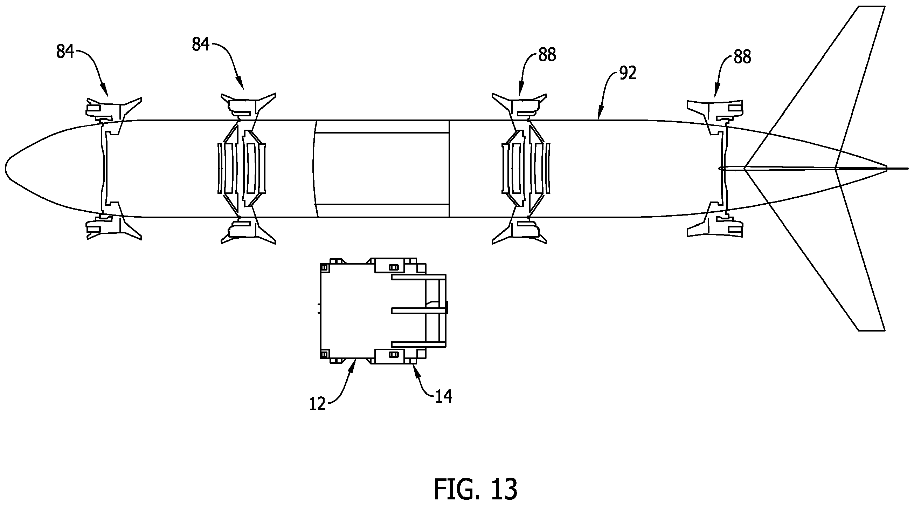

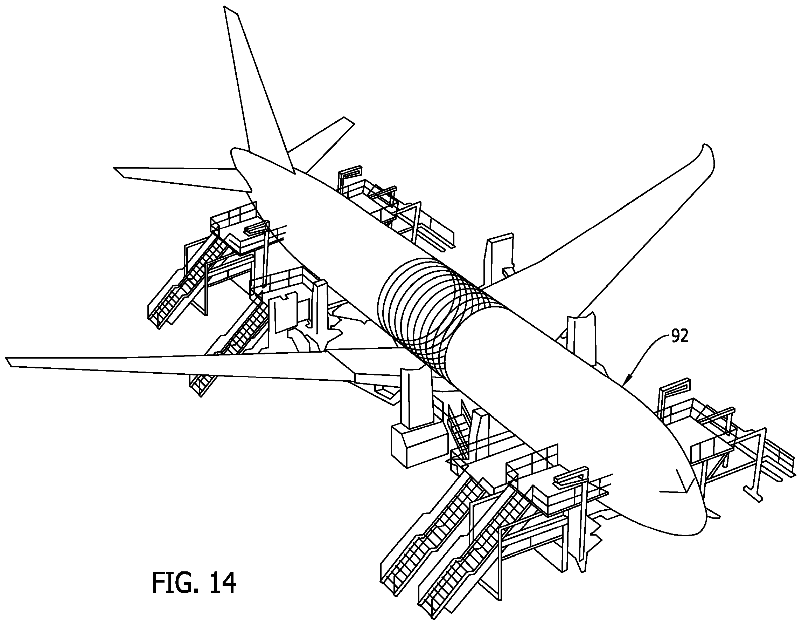

When the painting of the fuselage 92 is complete, the fuselage transport mechanisms 16, 18 can then move the fuselage 92 from the painting apparatus 96 to an assembly area where the jig transport mechanism 14 can again be positioned under the jig 12 attached to the fuselage 92. The fuselage transport mechanisms 16, 18 can then lower the fuselage 92 and the jig 12 back onto the jig transport mechanism 14. At the same time, the fuselage transport mechanisms 16, 18 lower the fuselage 92 onto the rigid body motion systems 84, 88 that have been raised to support the fuselage 92. With the fuselage 92 supported on the rigid body motion systems 84, 88, the fuselage transport mechanisms 16, 18 can then be removed from the jig 12. With the fuselage transport mechanisms 16, 18 removed from the jig 12, the jig 12 can then be disassembled from the fuselage 92. The rigid body motion systems 84, 88 can then be operated to raise the fuselage 92 above the jig 12 supported on the jig transport mechanism 14. The jig transport mechanism 14 can then be operated to move the jig 12 out from beneath the fuselage 86. This is represented in Figure 13. With the jig 12 removed from the fuselage 92 and the wing attachment structures 44, the wings of the aircraft can then be attached to the fuselage 92. This is represented in Figure 14.

## Claims

1. An apparatus for applying a substance to an entire assembled aircraft fuselage (92) comprised of a center section (40) of an aircraft fuselage (42), one or more aircraft fuselage forward sections (82) and one or more aircraft fuselage rearward sections (86), the apparatus comprising:
a jig (12) that is attachable to a wing attachment structure (44) of the aircraft fuselage (92) to singularly support the assembled aircraft fuselage (92) on the jig (12) in place of wings, wherein the wing attachment structure (44) is accurately positioned so that the wings can be assembled to the aircraft fuselage (42) in place of the jig (12) when applying the substance to the assembled aircraft fuselage (42) is completed;
a transport mechanism (16, 18) that is configured to support the jig (12) on the transport mechanism (16, 18), the transport mechanism (16, 18) being operable to move the jig (12) on further automated guided vehicles (74) when the jig (12) is attached to the assembled aircraft fuselage (92) and thereby move the assembled aircraft fuselage (92) attached to the jig (12); and,
an automated painting apparatus (96), the transport mechanism (16, 18) being operable to move the jig (12) when the jig (12) is attached to the assembled aircraft fuselage (92) to the automated painting apparatus (96) and thereby move the assembled aircraft fuselage (92) to the automated painting apparatus (96), the automated painting apparatus (96) comprising an automated guided vehicle (110) including a robot spraying head (94), the robot spraying head (94) being moveable relative to the jig (12) when the jig (12) is attached to the assembled aircraft fuselage (92) and the jig (12) and attached assembled aircraft fuselage (92) have been moved by the transport mechanism (16, 18) to the automated painting apparatus (96), the robot spraying head (94) being operable to spray the substance on an entirety of the exterior surface of the assembled aircraft fuselage (92) attached to the jig (12) by moving the robot spraying head (94) on the automated guided vehicle (110) relative to the transport mechanism when the jig (12) has been moved by the transport mechanism (16, 18) to the automated painting apparatus (96) and the assembled aircraft fuselage (92) attached to the jig (12).

2. The apparatus of claim 1, further comprising:
the robot spraying head (94) being moveable between the aircraft fuselage (92) attached to the jig (12) and the transport mechanism (16, 18) when the transport mechanism (16, 18) has moved the jig (12) and the aircraft fuselage (92) attached to the jig (12) to the automated painting apparatus (96).

3. The apparatus of claim 1 or 2, further comprising:
the transport mechanism (16, 18) being operable to move the jig (12) and the aircraft fuselage (92) attached to the jig (12) away from the automated painting apparatus (96).

4. The apparatus of claim 3, further comprising:
the robot spraying head (94) being one of a plurality of robot spraying heads (94) of the automated painting apparatus (96), each robot spraying head (94) of the plurality of robot spraying heads (94) being moveable relative to the jig (12) and the transport mechanism (16, 18) when the transport mechanism (16, 18) has moved the jig (12) and the aircraft fuselage (92) attached to the jig (12) to the automated painting apparatus (96); and
the plurality of robot spraying heads (94) being operable to spray the substance on the aircraft fuselage (92) when the jig (12) is attached to the aircraft fuselage (92) and the jig (12) is supported by the transport mechanism (16, 18) and has been moved by the transport mechanism (16, 18) to the automated painting apparatus (96).

5. The apparatus of claim 4, further comprising:
a plurality of paint towers (98);
each robot spraying head (94) being supported on a paint tower (98) of the plurality of paint towers (98) for movement of the robot spraying head (94) in opposite vertical directions relative to the aircraft fuselage (92) when the jig (12) is attached to the aircraft fuselage (92) and the jig (12) is supported by the transport mechanism (16, 18) in the automated painting apparatus (96), and each robot spraying head (94) being supported on a paint tower (98) of the plurality of paint towers (98) for movement of the robot spraying head (94) in opposite horizontal directions relative to the aircraft fuselage (92) when the jig (12) is attached to the aircraft fuselage (92) and the jig (12) is supported by the transport mechanism (16, 18) in the automated painting apparatus (96).

6. The apparatus of any of claims 1 to 5, further comprising:
the automated painting apparatus (96) comprising a track (102), the robot spraying head (94) being moveable relative to the jig (12) and the transport mechanism (16, 18) along the track (102.

7. The apparatus of claim 6, further comprising:
the robot spraying head (94) being one of a plurality of robot spraying heads (94) of the automated painting apparatus (96);
the track (102) being one of a pair of parallel tracks (102) of the automated painting apparatus (96); and,
the plurality of robot spraying heads (94) being moveable relative to the jig (12) and the transport mechanism (16, 18) along the pair of tracks (102).

8. The apparatus of any of claims 1 to 7, further comprising:
the jig (12) being attachable to the aircraft fuselage (92) in place of a wing of an aircraft.

9. The apparatus of any of claims 1 to 8, further comprising:
the substance being a paint.

10. A method for applying a substance to an entire assembled aircraft fuselage (92) comprised of a center section (40) of an aircraft fuselage (42), one or more aircraft fuselage forward sections (82) and one or more aircraft fuselage rearward sections (86), the method comprising:
engaging a wing attachment structure (44) to singularly support the assembled aircraft fuselage (92);
using robots (94) on automated guided vehicles (110) to apply the substance to an entirety of an exterior surface of the assembled aircraft fuselage (92);
attaching a jig (12) to the wing attachment structure (44) to singularly support the assembled aircraft fuselage (92) on the jig (12) in place of wings, wherein the wing attachment structure (44) is accurately positioned so that the wings can be assembled to the aircraft fuselage (42) in place of the jig (12) when applying the substance to the assembled aircraft fuselage (42) is completed;
supporting the jig (12) on a transport mechanism (16, 18) and moving the jig (12) and the assembled aircraft fuselage (92) to the robots (94) on further automated guided vehicles (74);
moving the robots (94) on the automated guided vehicles (110) relative to the transport mechanism (16, 18), the jig (12) supported on the transport mechanism (16, 18) and the assembled aircraft fuselage (92) attached to the jig (12); and
applying the substance to the entirety of the exterior surface of the assembled aircraft fuselage (92).

11. The method of claim 10, further comprising:
operating the transport mechanism (16, 18) to move the jig (12) supported on the transport mechanism (16, 18) and the aircraft fuselage (92) attached to the jig (12) away from a spraying apparatus (96) and the robots (94) on the automated guided vehicles (110) after applying the substance to the aircraft fuselage (92).

12. The method of claim 11, further comprising:
moving the robots (94) on the automated guided vehicles (110) along opposite sides of the aircraft fuselage (92) attached to the jig (12) and supported by the transport mechanism (16, 18) through operation of the automated guided vehicles (110).

13. The method of any of claims 10 to 12, further comprising:
moving the robots (94) vertically and horizontally relative to the aircraft fuselage (92) to apply the substance to a length and a circumference of the aircraft fuselage (92) through operation of the automated guided vehicles (110).

14. The method of any of claims 10 to 13, further comprising:
the substance being a paint.

## Patentansprüche

1. Vorrichtung zum Auftragen einer Substanz auf einen vollständig zusammengebauten Luftfahrzeugrumpf (92), der einen Mittelabschnitt (40) eines Luftfahrzeugrumpfs (42), einen oder mehrere Luftfahrzeugrumpf-Vorderabschnitte (82) und einen oder mehrere Luftfahrzeugrumpf-Hinterabschnitte (86) aufweist, wobei die Vorrichtung aufweist:
eine Haltevorrichtung (12), die an einer Flügelanbringstruktur (44) des Luftfahrzeugrumpfs (92) anbringbar ist, um den zusammengebauten Luftfahrzeugrumpf (92) singulär auf der Haltevorrichtung (12) anstelle von Flügeln zu stützen, wobei die Flügelanbringstruktur (44) akkurat so positioniert ist, dass die Flügel an dem Luftfahrzeugrumpf (42) anstelle der Haltevorrichtung (12) angebaut werden können, wenn ein Auftragen der Substanz auf den zusammengebauten Luftfahrzeugrumpf (42) abgeschlossen ist;
einen Transportmechanismus (16, 18), der eingerichtet ist, die Haltevorrichtung (12) auf dem Transportmechanismus (16, 18) zu stützen, wobei der Transportmechanismus (16, 18) betriebsfähig ist, die Haltevorrichtung (12) auf weiteren, automatisiert geführten Fahrzeugen (74) zu bewegen, wenn die Haltevorrichtung (12) an dem zusammengebauten Luftfahrzeugrumpf (92) angebracht ist, und dadurch den zusammengebauten Luftfahrzeugrumpf (92) zu bewegen, der an der Haltevorrichtung (12) angebracht ist; und
eine automatisierte Lackiervorrichtung (96), wobei der Transportmechanismus (16, 18) betriebsfähig ist, die Haltevorrichtung (12), wenn die Haltevorrichtung (12) an dem zusammengebauten Luftfahrzeugrumpf (92) angebracht ist, zur automatisierten Lackiervorrichtung (96) zu bewegen und dadurch den zusammengebauten Luftfahrzeugrumpf (92) zur automatisierten Lackiervorrichtung (96) zu bewegen, wobei die automatisierte Lackiervorrichtung (96) ein automatisiert geführtes Fahrzeug (110) einschließlich eines Robotersprühkopfes (94) aufweist, wobei der Robotersprühkopf (94) relativ zur Haltevorrichtung (12) beweglich ist, wenn die Haltevorrichtung (12) an dem zusammengebauten Luftfahrzeugrumpf (92) angebracht ist und wenn die Haltevorrichtung (12) und der angebrachte, zusammengebaute Luftfahrzeugrumpf (92) durch den Transportmechanismus (16, 18) zur automatisierten Lackiervorrichtung (96) bewegt wurden, wobei der Robotersprühkopf (94) betriebsfähig ist, die Substanz auf eine Gesamtheit der Außenfläche des zusammengebauten Luftfahrzeugrumpfs (92) zu sprühen, der an der Haltevorrichtung (12) angebracht ist, indem der Robotersprühkopf (94) auf dem automatisiert geführten Fahrzeug (110) relativ zum Transportmechanismus bewegt wird, wenn die Haltevorrichtung (12) durch den Transportmechanismus (16, 18) zu der automatisierten Lackiervorrichtung (96) bewegt wurde und wenn der zusammengebaute Luftfahrzeugrumpf (92) an der Haltevorrichtung (12) angebracht ist.

2. Vorrichtung nach Anspruch 1, die ferner aufweist:
den Robotersprühkopf (94), der zwischen dem Luftfahrzeugrumpf (92), der an der Haltevorrichtung (12) angebracht ist, und dem Transportmechanismus (16, 18) beweglich ist, wenn der Transportmechanismus (16, 18) die Haltevorrichtung (12) und den Luftfahrzeugrumpf (92), der an der Haltevorrichtung (12) angebracht ist, zur automatisierten Lackiervorrichtung (96) bewegt hat.

3. Vorrichtung nach Anspruch 1 oder 2, die ferner aufweist:
den Transportmechanismus (16, 18), der betriebsfähig ist, die Haltevorrichtung (12) und den Luftfahrzeugrumpf (92), der an der Haltevorrichtung (12) angebracht ist, von der automatisierten Lackiervorrichtung (96) weg zu bewegen.

4. Vorrichtung nach Anspruch 3, die ferner aufweist:
den Robotersprühkopf (94), der einer von einer Vielzahl von Robotersprühköpfen (94) der automatisierten Lackiervorrichtung (96) ist, wobei jeder Robotersprühkopf (94) der Vielzahl von Robotersprühköpfen (94) relativ zu der Haltevorrichtung (12) und zu dem Transportmechanismus (16, 18) beweglich ist, wenn der Transportmechanismus (16, 18) die Haltevorrichtung (12) und den Luftfahrzeugrumpf (92), der an der Haltevorrichtung (12) angebracht ist, zur automatisierten Lackiervorrichtung (96) bewegt hat; und
die Vielzahl von Robotersprühköpfen (94), die betriebsfähig sind, die Substanz auf den Luftfahrzeugrumpf (92) zu sprühen, wenn die Haltevorrichtung (12) an dem Luftfahrzeugrumpf (92) angebracht ist und wenn die Haltevorrichtung (12) durch den Transportmechanismus (16, 18) gestützt wird und durch den Transportmechanismus (16, 18) zur automatisierten Lackiervorrichtung (96) bewegt wurde.

5. Vorrichtung nach Anspruch 4, die ferner aufweist:
eine Vielzahl von Lackiertürmen (98);
wobei jeder Robotersprühkopf (94) an einem Lackierturm (98) der Vielzahl von Lackiertürmen (98) für eine Bewegung des Robotersprühkopfs (94) in entgegengesetzten vertikalen Richtungen relativ zum Luftfahrzeugrumpf (92) gehalten wird, wenn die Haltevorrichtung (12) an dem Luftfahrzeugrumpf (92) angebracht ist und wenn die Haltevorrichtung (12) durch den Transportmechanismus (16, 18) in der automatisierten Lackiervorrichtung (96) gestützt wird, und wobei jeder Robotersprühkopf (94) an einem Lackierturm (98) der Vielzahl von Lackiertürmen (98) für eine Bewegung des Robotersprühkopfs (94) in entgegengesetzten horizontalen Richtungen relativ zu dem Luftfahrzeugrumpf (92) gehalten wird, wenn die Haltevorrichtung (12) an dem Luftfahrzeugrumpf (92) angebracht ist und wenn die Haltevorrichtung (12) durch den Transportmechanismus (16, 18) in der automatisierten Lackiervorrichtung (96) gestützt wird.

6. Vorrichtung nach einem der Ansprüche 1 bis 5, die ferner aufweist:
die automatisierte Lackiervorrichtung (96), die eine Spur (102) aufweist, wobei der Robotersprühkopf (94) relativ zur Haltevorrichtung (12) und zum Transportmechanismus (16, 18) entlang der Spur (102) beweglich ist.

7. Vorrichtung nach Anspruch 6, die ferner aufweist:
den Robotersprühkopf (94), der einer aus einer Vielzahl von Robotersprühköpfen (94) der automatisierten Lackiervorrichtung (96) ist;
die Spur (102), die eine aus einem Paar von parallelen Spuren (102) der automatisierten Lackiervorrichtung (96) ist; und
die Vielzahl von Robotersprühköpfen (94), die relativ zur Haltevorrichtung (12) und zum Transportmechanismus (16, 18) entlang des Paares von Spuren (102) beweglich ist.

8. Vorrichtung nach einem der Ansprüche 1 bis 7, die ferner aufweist:
die Haltevorrichtung (12), die an dem Luftfahrzeugrumpf (92) anstelle eines Flügels eines Luftfahrzeugs anbringbar ist.

9. Vorrichtung nach einem der Ansprüche 1 bis 8, die ferner aufweist:
die Substanz, die ein Lack ist.

10. Verfahren zum Auftragen einer Substanz auf einen vollständig zusammengebauten Luftfahrzeugrumpf (92), der einen Mittelabschnitt (40) eines Luftfahrzeugrumpfs (42), einen oder mehrere Luftfahrzeug-Vorderabschnitte (82) und einen oder mehrere Luftfahrzeug-Hinterabschnitte (86) aufweist, wobei das Verfahren aufweist:
Ineingriffbringen einer Flügelanbringstruktur (44), um den zusammengebauten Luftfahrzeugrumpf (92) singulär zu stützen;
Verwenden von Robotern (94) auf automatisiert geführten Fahrzeugen (110), um die Substanz auf eine Gesamtheit einer Außenfläche des zusammengebauten Luftfahrzeugrumpfs (92) aufzutragen;
Anbringen einer Haltevorrichtung (12) an der Flügelanbringstruktur (44), um den zusammengebauten Luftfahrzeugrumpf (92) auf der Haltevorrichtung anstelle von Flügeln singulär zu stützen, wobei die Flügelanbringstruktur (44) akkurat derart positioniert wird, dass die Flügel an dem Luftfahrzeugrumpf (42) anstelle der Haltevorrichtung (12) angebaut werden können, wenn ein Auftragen der Substanz auf den zusammengebauten Luftfahrzeugrumpf (42) abgeschlossen ist;
Stützen der Haltestruktur (12) auf einem Transportmechanismus (16, 18) und Bewegen der Haltestruktur (12) und des zusammengebauten Luftfahrzeugrumpfs (92) zu den Robotern (94) auf weiteren, automatisiert geführten Fahrzeugen (74);
Bewegen der Roboter (94) auf dem automatisiert geführten Fahrzeug (110) relativ zum Transportmechanismus (16, 18), wobei die Haltevorrichtung (12) auf den Transportmechanismus (16, 18) gestützt ist und wobei der zusammengebaute Luftfahrzeugrumpf (92) an der Haltevorrichtung (12) angebracht ist; und
Auftragen der Substanz auf die Gesamtheit der Außenfläche des zusammengebauten Luftfahrzeugrumpfs (92).

11. Verfahren nach Anspruch 10, das ferner aufweist:
Betätigen des Transportmechanismus (16, 18), um die Haltevorrichtung (12), die auf den Transportmechanismus (16, 18) gestützt ist, und den Luftfahrzeugrumpf (92), der an der Haltevorrichtung (12) angebracht ist, von einer Sprühvorrichtung (96) und den Robotern (94) auf den automatisiert geführten Fahrzeugen (110) weg zu bewegen, nachdem die Substanz auf den Luftfahrzeugrumpf (92) aufgetragen wurde.

12. Verfahren nach Anspruch 11, das ferner aufweist:
Bewegen der Roboter (94) auf den automatisiert geführten Fahrzeugen (110) entlang entgegengesetzten Seiten des Luftfahrzeugrumpfs (92), der an der Haltevorrichtung (12) angebracht ist und der durch den Transportmechanismus (16, 18) gestützt ist, durch eine Betätigung der automatisiert geführten Fahrzeuge (110).

13. Verfahren nach einem der Ansprüche 10 bis 12, das ferner aufweist:
Bewegen der Roboter (94) vertikal und horizontal relativ zum Luftfahrzeugrumpf (92), um die Substanz auf eine Länge und einen Umfang des Luftfahrzeugrumpfs (92) durch eine Betätigung der automatisiert geführten Fahrzeuge (110) aufzutragen.

14. Verfahren nach einem der Ansprüche 10 bis 13, das ferner aufweist:
die Substanz ist ein Lack.

## Revendications

1. Appareil d'application d'une substance sur tout un fuselage assemblé (92) d'aéronef comprenant un tronçon central (40) d'un fuselage (42) d'aéronef, un ou plusieurs tronçons avant (82) de fuselage d'aéronef et un ou plusieurs tronçons arrière (86) de fuselage d'aéronef, l'appareil comprenant :
un gabarit (12) susceptible d'être attaché à une structure d'attache (44) d'ailes du fuselage (92) d'aéronef pour soutenir singulièrement le fuselage assemblé (92) d'aéronef sur le gabarit (12) à la place d'ailes, la structure d'attache (44) d'ailes étant positionnée avec précision de manière à permettre l'assemblage des ailes au fuselage (42) d'aéronef à la place du gabarit (12) à l'issue de l'application de la substance sur le fuselage assemblé (42) d'aéronef ;
un mécanisme de transport (16, 18) configuré pour soutenir le gabarit (12) sur le mécanisme de transport (16, 18), le mécanisme de transport (16, 18) étant actionnable pour déplacer le gabarit (12) sur des véhicules à guidage automatique supplémentaires (74) lorsque le gabarit (12) est attaché au fuselage assemblé (92) d'aéronef et déplacer ainsi le fuselage assemblé (92) d'aéronef attaché au gabarit (12) ; et,
un appareil de peinture automatisé (96), le mécanisme de transport (16, 18) étant actionnable pour déplacer le gabarit (12), lorsque le gabarit (12) est attaché au fuselage assemblé (92) d'aéronef, jusqu'à l'appareil de peinture automatisé (96) et déplacer ainsi le fuselage assemblé (92) d'aéronef jusqu'à l'appareil de peinture automatisé (96), l'appareil de peinture automatisé (96) comprenant un véhicule à guidage automatique (110) comportant une tête de pulvérisation robot (94), la tête de pulvérisation robot (94) étant mobile par rapport au gabarit (12) lorsque le gabarit (12) est attaché au fuselage assemblé (92) d'aéronef et le gabarit (12) et le fuselage assemblé (92) d'aéronef attaché ont été déplacés par le mécanisme de transport (16, 18) jusqu'à l'appareil de peinture automatisé (96), la tête de pulvérisation robot (94) étant actionnable pour pulvériser la substance sur toute la surface extérieure du fuselage assemblé (92) d'aéronef attaché au gabarit (12) par déplacement de la tête de pulvérisation robot (94) sur le véhicule à guidage automatique (110) par rapport au mécanisme de transport lorsque le gabarit (12) a été déplacé par le mécanisme de transport (16, 18) jusqu'à l'appareil de peinture automatisé (96) et au fuselage assemblé (92) d'aéronef attaché au gabarit (12).

2. Appareil selon la revendication 1, comprenant en outre :
le fait que la tête de pulvérisation robot (94) est mobile entre le fuselage (92) d'aéronef attaché au gabarit (12) et le mécanisme de transport (16, 18) lorsque le mécanisme de transport (16, 18) a déplacé le gabarit (12) et le fuselage (92) d'aéronef attaché au gabarit (12) jusqu'à l'appareil de peinture automatisé (96).

3. Appareil selon la revendication 1 ou 2, comprenant en outre :
le fait que le mécanisme de transport (16, 18) est actionnable pour déplacer le gabarit (12) et le fuselage (92) d'aéronef attaché au gabarit (12) à l'écart de l'appareil de peinture automatisé (96).

4. Appareil selon la revendication 3, comprenant en outre :
le fait que la tête de pulvérisation robot (94) consiste en l'une d'une pluralité de têtes de pulvérisation robots (94) de l'appareil de peinture automatisé (96), chaque tête de pulvérisation robot (94) de la pluralité de têtes de pulvérisation robots (94) étant mobile par rapport au gabarit (12) et au mécanisme de transport (16, 18) lorsque le mécanisme de transport (16, 18) a déplacé le gabarit (12) et le fuselage (92) d'aéronef attaché au gabarit (12) jusqu'à l'appareil de peinture automatisé (96) ; et
le fait que la pluralité de têtes de pulvérisation robots (94) sont actionnables pour pulvériser la substance sur le fuselage (92) d'aéronef lorsque le gabarit (12) est attaché au fuselage (92) d'aéronef et le gabarit (12) est soutenu par le mécanisme de transport (16, 18) et a été déplacé par le mécanisme de transport (16, 18) jusqu'à l'appareil de peinture automatisé (96).

5. Appareil selon la revendication 4, comprenant en outre :
une pluralité de tours à peinture (98) ;
le fait que chaque tête de pulvérisation robot (94) est portée par une tour à peinture (98) de la pluralité de tours à peinture (98) pour permettre le déplacement de la tête de pulvérisation robot (94) dans des directions verticales opposées par rapport au fuselage (92) d'aéronef lorsque le gabarit (12) est attaché au fuselage (92) d'aéronef et le gabarit (12) est soutenu par le mécanisme de transport (16, 18) dans l'appareil de peinture automatisé (96), et chaque tête de pulvérisation robot (94) est portée par une tour à peinture (98) de la pluralité de tours à peinture (98) pour permettre le déplacement de la tête de pulvérisation robot (94) dans des directions horizontales opposées par rapport au fuselage (92) d'aéronef lorsque le gabarit (12) est attaché au fuselage (92) d'aéronef et le gabarit (12) est soutenu par le mécanisme de transport (16, 18) dans l'appareil de peinture automatisé (96).

6. Appareil selon l'une quelconque des revendications 1 à 5, comprenant en outre :
le fait que l'appareil de peinture automatisé (96) comprend une voie de guidage (102), la tête de pulvérisation robot (94) étant mobile par rapport au gabarit (12) et au mécanisme de transport (16, 18) le long de la voie de guidage (102).

7. Appareil selon la revendication 6, comprenant en outre :
le fait que la tête de pulvérisation robot (94) consiste en l'une d'une pluralité de têtes de pulvérisation robots (94) de l'appareil de peinture automatisé (96) ;
le fait que la voie de guidage (102) consiste en une paire de voies de guidage parallèles (102) de l'appareil de peinture automatisé (96) ; et,
le fait que la pluralité de têtes de pulvérisation robots (94) sont mobiles par rapport au gabarit (12) et au mécanisme de transport (16, 18) le long de la paire de voies de guidage (102).

8. Appareil selon l'une quelconque des revendications 1 à 7, comprenant en outre :
le fait que le gabarit (12) est susceptible d'être attaché au fuselage (92) d'aéronef à la place d'une aile d'un aéronef.

9. Appareil selon l'une quelconque des revendications 1 à 8, comprenant en outre :
le fait que la substance est une peinture.

10. Procédé d'application d'une substance sur tout un fuselage assemblé (92) d'aéronef comprenant un tronçon central (40) d'un fuselage (42) d'aéronef, un ou plusieurs tronçons avant (82) de fuselage d'aéronef et un ou plusieurs tronçons arrière (86) de fuselage d'aéronef, le procédé comprenant :
l'entrée en prise avec une structure d'attache (44) d'ailes pour soutenir singulièrement le fuselage assemblé (92) d'aéronef ;
l'utilisation de robots (94) sur des véhicules à guidage automatique (110) pour appliquer la substance sur toute une surface extérieure du fuselage assemblé (92) d'aéronef ;
l'attache d'un gabarit (12) à la structure d'attache (44) d'ailes pour soutenir singulièrement le fuselage assemblé (92) d'aéronef sur le gabarit (12) à la place d'ailes, la structure d'attache (44) d'ailes étant positionnée avec précision de manière à permettre l'assemblage des ailes au fuselage (42) d'aéronef à la place du gabarit (12) à l'issue de l'application de la substance sur le fuselage assemblé (42) d'aéronef ;
le soutien du gabarit (12) sur un mécanisme de transport (16, 18) et le déplacement du gabarit (12) et du fuselage assemblé (92) d'aéronef jusqu'aux robots (94) sur des véhicules à guidage automatique supplémentaires (74) ;
le déplacement des robots (94) sur les véhicules à guidage automatique (110) par rapport au mécanisme de transport (16, 18), au gabarit (12) soutenu sur le mécanisme de transport (16, 18) et au fuselage assemblé (92) d'aéronef attaché au gabarit (12) ; et
l'application de la substance sur toute la surface extérieure du fuselage assemblé (92) d'aéronef.

11. Procédé selon la revendication 10, comprenant en outre :
l'actionnement du mécanisme de transport (16, 18) pour déplacer le gabarit (12) soutenu sur le mécanisme de transport (16, 18) et le fuselage (92) d'aéronef attaché au gabarit (12) à l'écart d'un appareil de pulvérisation (96) et des robots (94) sur les véhicules à guidage automatique (110) suite à l'application de la substance sur le fuselage (92) d'aéronef.

12. Procédé selon la revendication 11, comprenant en outre :
le déplacement des robots (94) sur les véhicules à guidage automatique (110) le long de côtés opposés du fuselage (92) d'aéronef attaché au gabarit (12) et soutenu par le mécanisme de transport (16, 18) par actionnement des véhicules à guidage automatique (110).

13. Procédé selon l'une quelconque des revendications 10 à 12, comprenant en outre :
le déplacement vertical et horizontal des robots (94) par rapport au fuselage (92) d'aéronef pour appliquer la substance sur une longueur et une circonférence du fuselage (92) d'aéronef par actionnement des véhicules à guidage automatique (110).

14. Procédé selon l'une quelconque des revendications 10 à 13, comprenant en outre :
le fait que la substance est une peinture.
